# EUROPEAN PATENT APPLICATION

(11) **EP 4 006 399 A1**
(43) Date of publication of application: **01.06.2022**
(21) Application number: 20812506.2
(22) Date of filing: 24.04.2020
(51) Int. Cl.: F16L 55/045, F16L 9/21, F16K 47/02, F16K 47/08

(54) **WATER INLET MECHANISM**

(30) Priority: 27.05.2019 CN 201920775324 U; 10.07.2019 CN 201921076039 U; 12.09.2019 CN 201921518540 U
(71) Applicant: Xiamen R&T Plumbing Technology Co., Ltd., Xiamen, Fujian 361000 (CN)
(72) Inventor: ZHANG, Zulian, Xiamen, Fujian 361000 (CN); PAN, Dongdong, Xiamen, Fujian 361000 (CN); HUANG, Candong, Xiamen, Fujian 361000 (CN); HUANG, Guiyang, Xiamen, Fujian 361000 (CN); ZHONG, Zhijun, Xiamen, Fujian 361000 (CN)
(74) Representative: Loo, Chi Ching
(86) International application number: PCT/CN2020/086614
(87) International publication number: WO 2020/238512

(57) **Abstract**

Disclosed is a water inlet mechanism, comprising a valve body (10) and a silencing element (20), wherein the valve body (10) is provided with a water outlet (131); the silencing element (20) is provided with a silencing channel (21) communicated with the water outlet (131); when water flows in, a water flow in the valve body (10) flows through the silencing channel (21), such that the impact force of the water flow is reduced; and a buffer element (40) is disposed in the silencing channel (21), and water in the silencing channel (21) flows out after the kinetic energy of the water flow is reduced under the action of the buffer element (40); or a flow guide element (30) is disposed in the silencing channel (21), and water in the silencing channel (21) flows out under the flow guide action of the flow guide element (30).

## Description

### BACKGROUND OF THE INVENTION

### 1. Technical Field

The invention relates to the technical field of bathroom products, in particular to a water inlet mechanism.

### 2. Description of Related Art

The water outlet of an AG water inlet valve is a certain distance above the bottom of a water tank, so water will impact the bottom of the water tank when directly flowing down via the water outlet above, thus generating loud noise.

### BRIEF SUMMARY OF THE INVENTION

In order to reduce the noise, a silencing pipe is additionally disposed at the water outlet. However, existing silencing pipes are typically hollow pipes, so when water flows out via the water outlet, most of the water still directly falls onto the water surface of the water tank. Particularly when the water level in the water tank is over the bottom of the silencing pipe, the silencing pipe is similar to a loudspeaker, water impact sounds propagate along the pipe wall and generate loud noise.

The objective of the invention is to solve the above-mentioned problems by providing a water inlet mechanism.

To fulfill the above objective, the technical solution adopted by the invention is as follows: a water inlet mechanism comprises a valve body and a silencing element, wherein the valve body is provided with a water outlet, and the silencing element is provided with a silencing channel communicated with the water outlet, and when water flows in, a water flow in the valve body flows through the silencing channel, such that impact force of the water flow is reduced; a buffer element is disposed in the silencing channel, and water in the silencing channel flows out after kinetic energy of the water flow is reduced under the action of the buffer element; and/or, a flow guide element is disposed in the silencing channel, and water in the silencing channel flows out under the flow guide action of the flow guide element.

Preferably, the flow guide element is a plurality of flow guide ribs disposed in the silencing channel, and the flow guide ribs extend in an axial direction of the silencing element; and the flow guide ribs collaborate with the silencing element to divide the silencing channel into a plurality of cavities; and the flow guide ribs are spaced apart from each other.

Preferably, the buffer element is disposed close to a water inlet of the silencing element, and water in the silencing element flows down along an inner wall of the silencing channel after being buffered by the buffer element.

Preferably, the buffer element is a filter screen or a water-stop rib.

Preferably, the silencing element is a silencing pipe; or, the silencing element comprises a hollow pipe with an inner cavity forming the silencing channel.

Preferably, a water inlet of the silencing element is shaped like a bell mouth with an inner diameter becoming larger gradually from inside to outside.

Preferably, the water outlet of the valve body is located over the water inlet of the silencing element and is located above a water level in a water tank; and an air gap exists between the water outlet of the valve body and the water inlet of the silencing channel, and no barrier exists in the air gap.

Preferably, the water inlet mechanism further comprises a flow guide element, and when the silencing channel overflows, water flowing over from the silencing channel is guided by the flow guide element.

Preferably, the water flowing over from the silencing channel is guided into an inner cavity of a toilet tank by the flow guide element.

Preferably, the flow guide element is a flow guide port formed in the silencing channel, and the flow guide port is lower than a water inlet of the silencing channel.

Preferably, the flow guide element is located upstream of the buffer element.

Preferably, the silencing element is integrally formed on a water-stop cup, used for receiving a control buoy, of the water inlet valve; or, the silencing element is formed separately and is fixedly disposed on the water-stop cup, used for receiving the control buoy, of the water inlet valve; and the water in the silencing channel is guided out of the water-stop cup by the flow guide element.

On the basis of the same inventive concept, the invention further provides another water inlet mechanism, comprising a valve body and a water-stop assembly, the valve body comprising a water inlet channel and a water outlet channel, the water-stop assembly controlling the water inlet channel to be communicated or not communicated with the water outlet channel, wherein the water outlet channel is provided with at least one section of buffer channel communicated with the water outlet channel, and a water flow in the water outlet channel flows out after kinetic energy of the water flow is reduced under the action of the buffer channel.

Preferably, the water outlet channel is provided with a first flow guide element, and the water flow in the water outlet channel forms a vertical baffle channel under the action of the first flow guide element, and the buffer channel comprises the vertical baffle channel.

Preferably, the first flow guide element comprises a water outlet pipe, and the water in the water outlet channel rises along an outer wall of the water outlet pipe and flows down from an inner cavity of the water outlet pipe, such that the vertical baffle channel is formed.

Preferably, the water outlet channel is provided with a second flow guide element, and the water flow in the water outlet channel forms a horizontal baffle channel under the action of the second flow guide element, and the buffer channel comprises the horizontal baffle channel.

Further, the second flow guide element is a baffle plate or a bent pipe.

Preferably, the water outlet channel is provided with a first buffer element for applying resistance to the water flow in the water outlet channel, such that the water flow in the water outlet channel forms a first deceleration channel under the action of the first buffer element; and the buffer channel comprises the first deceleration channel.

Preferably, the first buffer element comprises a plurality of protrusions arranged in an array, and the protrusions are used for applying resistance to the water flow in the water outlet channel.

Preferably, the water outlet channel is provided with a second buffer element for applying resistance to the water flow in the water outlet channel, and the water flow in the water outlet channel forms a second deceleration channel under the action of the second buffer element; and the buffer channel comprises the second deceleration channel.

Preferably, the second buffer element comprises a filter screen for applying resistance to the water flow in the water outlet channel.

Preferably, the water-stop assembly comprises a top cover disposed on the water outlet channel, the top cover has a side formed with a pressure release hole and a side provided with a water-stop gasket, a plurality of partition plates spaced apart from each other are disposed on the top cover, the partition plates collaborate with the valve body to form a top cover flow guide channel, and the buffer channel comprises the top cover flow guide channel.

Preferably, a third flow guide element is disposed at a water outlet end of the water outlet channel, the water flow in the water outlet channel forms an outlet water flow guide channel under the action of the third flow guide element, and the buffer channel comprises the outlet water flow guide channel.

The invention has the following beneficial effects:
1. According to the water inlet mechanism of the invention, the buffer element is additionally disposed in the silencing channel to reduce the kinetic energy of the water flow so as to decrease the water pressure directly applied to the surface of a water tank, such that noise is reduced; or, the flow guide element is additionally arranged, and water in the silencing channel flows down after being guided by the flow guide element, such that noise is effectively reduced.
2. Water in the silencing element flows down along the inner wall of the silencing channel after being buffered by the buffer element, such that a slow flow is formed, and noise is further reduced.
3. The water inlet mechanism further comprises a flow guide element, and when the silencing channel overflows, water flowing over from the silencing channel is guided by the flow guide element to form a fixed overflow water path, such that other water paths are prevented from being affected.
4. Water flowing over from the silencing channel is guided into an inner cavity of a toilet tank by the flow guide element, such that other water paths are prevented from being affected.
5. The silencing element is integrally formed at the water-stop cup, used for receiving a control buoy, of the water inlet valve, or the silencing element is formed separately and is fixedly disposed on the water-stop cup, used for receiving the control buoy, of the water inlet valve; and water in the silencing channel is guided out of the water-stop cup by the flow guide element, such that overflow water is prevented from flowing into the water-stop cup, which may otherwise cause water to flow into the water inlet valve in advance and affect the water intake function of the water inlet valve.
6. The water inlet mechanism of the invention comprises a valve body and a water-stop assembly, the valve body comprises a water inlet channel and a water outlet channel, the water-stop assembly controls the water inlet channel to be communicated or not communicated with the water outlet channel, the water outlet channel is provided with at least one section of buffer channel communicated with the water outlet channel, and a water flow in the water outlet channel flows out after the kinetic energy of the water flow is reduced under the action of the buffer channel. In this solution, at least one section of buffer channel is disposed on the water outlet channel to reduce the kinetic energy of water when the water flow flows out of the water outlet channel, such that noise is effectively reduced.
7. The water outlet channel of the invention is provided with a first flow guide element, and a water flow in the water outlet channel forms a vertical baffle channel under the action of the first flow guide element, and the buffer channel comprises the vertical baffle channel; and the vertical baffle channel can prolong the flowing time of the water flow in the water outlet channel, such that the kinetic energy of the water flow flowing out of the water outlet channel is reduced, and noise is effectively reduced.
8. The water outlet channel of the invention is provided with a second flow guide element, and the water flow in the water outlet channel forms a horizontal baffle channel under the action of the second flow guide element, and the buffer channel comprises the horizontal baffle channel; and the horizontal baffle channel prolongs the flowing time of the water flow in the water outlet channel, such that kinetic energy of the water flow flowing out of the water outlet channel is reduced, and noise is effectively reduced.
9. The water outlet channel of the invention is provided with a first buffer element for applying resistance to the water flow in the water outlet channel, the water flow in the water outlet channel forms a first deceleration channel under the action of the first buffer element, and the buffer channel comprises the first deceleration channel; and the first deceleration channel applies resistance to the water flow in the water outlet channel, such that the kinetic energy of the water flow flowing out of the water outlet channel is reduced, and noise is effectively reduced.
10. The water outlet channel of the invention is provided with a second buffer element for applying resistance to the water flow in the water outlet channel, the water flow in the water outlet channel forms a second deceleration channel under the action of the first buffer element, and the buffer channel comprises the second deceleration channel; and the second deceleration channel applies resistance to the water flow in the water outlet channel, such that the kinetic energy of the water flow flowing out of the water outlet channel is reduced, and noise is effectively reduced.
11. The water-stop assembly of the invention comprises a top cover disposed on the water outlet channel, one side of the top cover is provided with a pressure release hole, the other side of the top cover is provided with a water-stop gasket, a plurality of partition plates spaced apart from each other are disposed on the top cover, the partition plates collaborate with the valve body to form a top cover flow guide channel, and the buffer channel comprises the top cover flow guide channel; and the top cover flow guide channel prolongs the flowing time of water in the water outlet channel, such that the kinetic energy of the water flow flowing out of the water outlet channel is reduced, and noise is effectively reduced.

### BRIEF DESCRIPTION OF THE SEVERAL VIEWS OF THE DRAWINGS

The accompanying drawings described herein are used to provide a further understanding of the invention, and constitute one part of the invention. Illustrative embodiments of the invention and descriptions of these illustrative embodiments are used to explain the invention, and are not intended to improperly limit the invention. Wherein,
FIG. 1 is a perspective view of a water inlet mechanism according to Embodiment 1 of the invention;
FIG. 2 is a perspective view of a silencing element of the water inlet mechanism according to Embodiment 1 of the invention;
FIG. 3 is a sectional view of the silencing element of the water inlet mechanism according to Embodiment 1 of the invention;
FIG. 4 is a perspective view of a silencing element of a water inlet mechanism according to Embodiment 2 of the invention;
FIG. 5 is a sectional view of the silencing element of the water inlet mechanism according to Embodiment 2 of the invention;
FIG. 6 is a perspective view of a silencing element of a water inlet mechanism according to Embodiment 3 of the invention;
FIG. 7 is a sectional view of the silencing element of the water inlet mechanism according to Embodiment 3 of the invention;
FIG. 8 is a first sectional view of a water inlet mechanism according to Embodiment 4 of the invention;
FIG. 9 is a second sectional view of the water inlet mechanism according to Embodiment 4 of the invention;
FIG. 10 is a perspective view of a water outlet pipe of the water inlet mechanism according to Embodiment 4 of the invention;
FIG. 11 is a perspective view of another water outlet pipe of the water inlet mechanism according to Embodiment 4 of the invention;
FIG. 12 is a perspective view of a valve body of the water inlet mechanism according to Embodiment 4 of the invention;
FIG. 13 is a vertical sectional view of a water inlet mechanism according to Embodiment 5 of the invention;
FIG. 14 is a first vertical sectional view of a water inlet mechanism according to Embodiment 6 of the invention;
FIG. 15 is a first horizontal sectional view of the water inlet mechanism according to Embodiment 6 of the invention;
FIG. 16 is a second horizontal sectional view of the water inlet mechanism according to Embodiment 6 of the invention;
FIG. 17 is a second vertical sectional view of the water inlet mechanism according to Embodiment 6 of the invention;
FIG. 18 is a perspective view of a gland of the water inlet mechanism according to Embodiment 6 of the invention;
FIG. 19 is an exploded view of a valve body of the water inlet mechanism according to Embodiment 6 of the invention;
FIG. 20 is a vertical sectional view of a water inlet mechanism according to Embodiment 7 of the invention;
FIG. 21 is a perspective view of a water inlet mechanism according to Embodiment 8 of the invention;

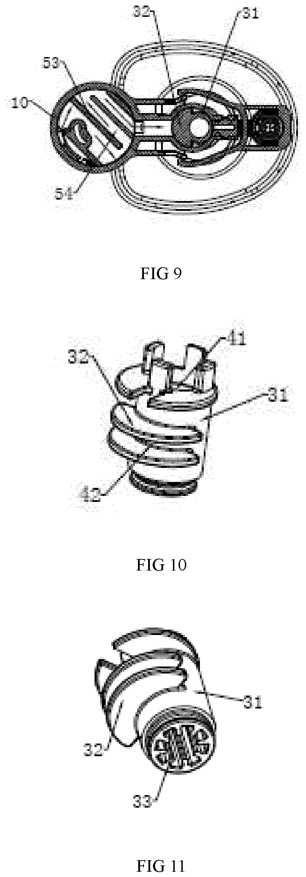

FIG. 9 is a partial sectional view of the water inlet mechanism according to Embodiment 8 of the invention.

In the figures:
10, valve body; 11, water inlet channel; 12, water outlet channel; 13, water outlet cavity; 131, water outlet; 14, cover; 15, gland;
20, silencing element; 21, silencing channel; 21a, cavity; 22, water inlet;
30, flow guide element; 31, first flow guide element (water outlet pipe); 32, second flow guide element (baffle plate); 33, third flow guide element; 34, flow guide part; 341, stop rib; 35, flow guide port;
40, buffer element (buffer channel); 41, vertical baffle channel; 42, horizontal baffle channel; 43, first deceleration channel; 431, protrusion; 432, receiving cavity; 433, flow guide rib; 44, second deceleration channel;
50, top cover; 51, pressure release hole; 52, water-stop gasket; 53, partition plate; 54, top cover flow guide channel;
60, filter screen;
70, water-stop cup.

### DETAILED DESCRIPTION OF THE INVENTION

To better clarify the technical issues to be settled by the invention and the technical solutions and beneficial effects of the invention, the invention will be further described in detail below in conjunction with the accompanying drawings and embodiments. It should be noted that the specific embodiments in the following description are merely used to explain the invention, and are not used to limit the invention.

### Embodiment 1:

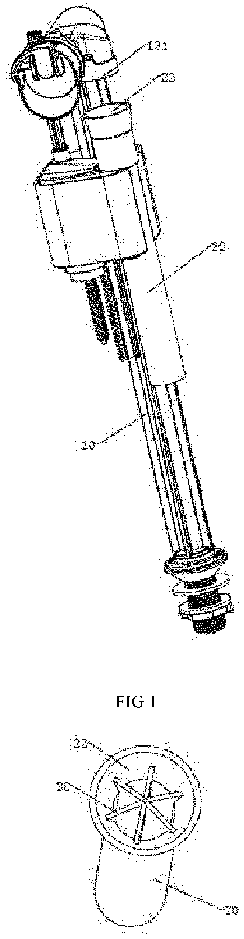

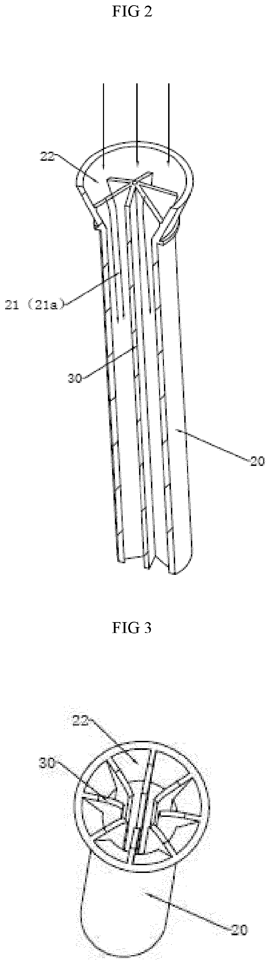

As shown in FIG. 1-FIG. 3, a water inlet mechanism comprises a valve body 10 and a silencing element 20, wherein the valve body 10 is provided with a water outlet 131, and the silencing element 20 is provided with a silencing channel 21 communicated with the water outlet 131; when water flows in, a water flow in the valve body 10 flows through the silencing channel 21, such that the impact force of the water flow is reduced; and a flow guide element 30 is disposed in the silencing channel 21, and the water in the silencing channel 21 flows out under the flow guide action of the flow guide element 30.

In this embodiment, the flow guide element 30 is a plurality of flow guide ribs disposed in the silencing channel 21, and the flow guide ribs extend in an axial direction of the silencing element 20.

In this embodiment, the flow guide ribs coordinate with the silencing element 20 to divide the silencing channel 21 into a plurality of cavities 21a.

In this embodiment, the silencing element 20 is a silencing pipe.

In this embodiment, a water inlet 22 of the silencing element 20 is shaped like a bell mouth with an inner diameter becoming larger gradually from inside to outside.

In this embodiment, the water outlet 131 of the valve body 10 is located over the water inlet 22 of the silencing element 20 and is located above the water level in a water tank.

The specific working process of this embodiment is as follows:

When water flows in, a water flow from the water outlet 131 of the valve body 10 flows into the silencing channel 21 via the water inlet 22 of the silencing element 20, and the water flow in a water inlet channel flows out along the cavities 21a under the flow guide action of the flow guide ribs.

### Embodiment 2:

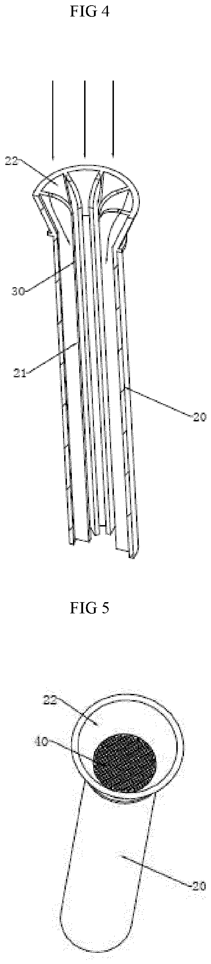

As shown in FIG. 4 and FIG. 5, this embodiment differs from Embodiment 1 mainly in the following aspects: the flow guide ribs are spaced apart from each other, and when water flows in, the water flow in the water inlet channel flows out under the flow guide action of the flow guide ribs.

### Embodiment 3:

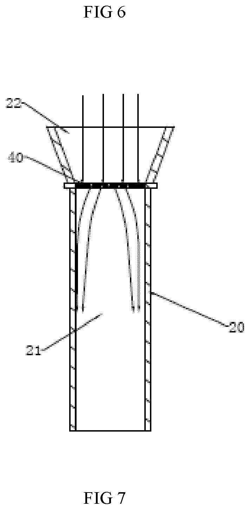

As shown in FIG. 6 and FIG. 7, this embodiment differs from Embodiment 1 mainly in the following aspects: a buffer element 40 is disposed in the silencing channel 21, and water in the silencing channel 21 flows out after kinetic energy of the water flow is reduced under the buffer action of the buffer element 40.

In this embodiment, water in the silencing element 20 flows down along an inner wall of the silencing channel 21 after being buffered by the buffer element 40.

In this embodiment, the buffer element 40 is a filter screen.

In this embodiment, the buffer element 40 is disposed close to the water inlet 22 of the silencing element 20.

### Embodiment 4: (the buffer channel comprises a top cover flow guide channel, a horizontal baffle channel, a vertical baffle channel, and a second deceleration channel).

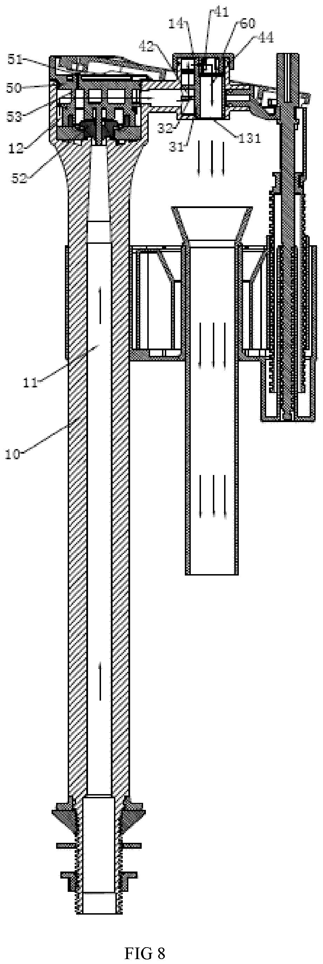

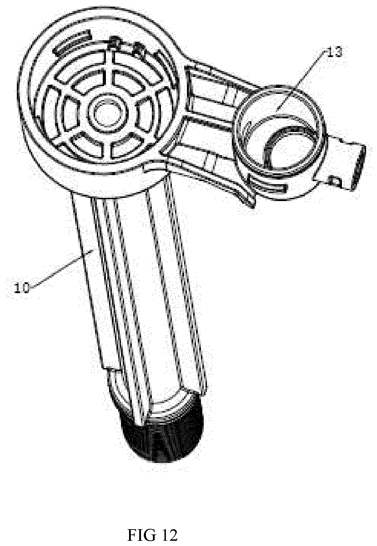

As shown in FIG. 8 to FIG. 12, a water inlet mechanism comprises a valve body 10 and a water-stop assembly, wherein the valve body 10 comprises a water inlet channel 11 and a water outlet channel 12, the water-stop assembly controls the water inlet channel 11 to be communicated or not communicated with the water outlet channel 12, the water outlet channel 12 is provided with at least one section of buffer channel communicated with the water outlet channel 12, and a water flow in the water outlet channel 12 flows out after kinetic energy of the water flow is reduced under the action of the buffer channel.

In this embodiment, the water outlet channel 12 is provided with a first flow guide element, and the water flow in the water outlet channel 12 forms a vertical baffle channel 41 under the action of the first flow guide element, and the buffer channel comprises the vertical baffle channel 41.

In this embodiment, the first flow guide element comprises a water outlet pipe 31, and water in the water outlet channel 12 rises along an outer wall of the water outlet pipe 31 and then flows out downwards from an inner cavity of the water outlet pipe 31, such that the vertical baffle channel 41 is formed.

As shown in FIG. 11, in this embodiment, a third flow guide element 33 is disposed at a water outlet end of the water outlet channel 12, the water flow in the water outlet channel 12 forms an outlet water flow guide channel under the action of the third flow guide element 33, and the buffer channel comprises the outlet water flow guide channel. Specifically, the third guide element 33 is a plurality of vertical ribs disposed in the water outlet pipe 31, and water in the water outlet pipe 31 flows out under the flow guide action of the vertical ribs.

In this embodiment, the water outlet channel 12 is provided with a second flow guide element, the water flow in the water outlet channel 12 forms a horizontal baffle channel 42 under the action of the second flow guide element, and the buffer channel comprises the horizontal baffle channel 42.

In this embodiment, the second flow guide element is a baffle plate 32 or a bent pipe. Specifically, the second flow guide element is two baffle plates 32 disposed on the outer wall of the water outlet pipe 31, the baffle plates 32 extend in a circumferential direction of the water outlet pipe 31, and the two baffle plates 32 are spaced apart from each other in an axial direction. Specifically, the water outlet channel 12 is provided with a water outlet cavity 13 communicated with the water outlet channel 12, an opening in the bottom of the water outlet cavity 13 forms a water outlet 142 of the water outlet channel 12, and the water outlet pipe 31 is disposed in the water outlet cavity 13 and is communicated with the water outlet 142. The water inlet mechanism further comprises a cover 14 which is connected to the water outlet cavity 13 and seals the water outlet cavity 13, such that the water outlet pipe 31 is limited in the water outlet cavity 13.

In this embodiment, the water outlet channel 12 is provided with a second buffer element for applying resistance to the water flow in the water outlet channel 12, the water flow in the water outlet channel 12 forms a second deceleration channel 44 under the action of the second buffer element, and the buffer channel comprises the second deceleration channel 44.

In this embodiment, the second buffer element comprises a filter screen 60 for applying resistance to the water flow in the water outlet channel 12. Specifically, the filter screen 60 is disposed in the water outlet pipe 31.

In this embodiment, the water-stop assembly comprises a top cover 50 disposed on the water outlet channel 12, one side of the top cover 50 is provided with a pressure release hole 51, the other side of the top cover 50 is provided with a water-stop gasket 52, the top cover 50 is provided with a plurality of partition plates 53 which are spaced apart from each other, the partition plates 53 collaborate with the valve body 10 to form a top cover flow guide channel 54, and the buffer channel comprises the top cover flow guide channel 54. Specifically, the partition plates 53 are linear partition plates 53.

The specific working process of this embodiment is as follows:
When water flows into the water inlet valve, water from the water inlet channel 11 flows into the water outlet channel 12, and the water flow in the water outlet channel 12 sequentially flows through the top cover flow guide channel 54, the horizontal baffle channel 42, the vertical baffle channel 41 and the second deceleration channel 44, and finally flows out via the water outlet 142 after kinetic energy of the water flow is gradually reduced under the action of the top cover flow guide channel 54, the horizontal baffle channel 42, the vertical baffle channel 41, and the second deceleration channel 44.

### Embodiment 5:

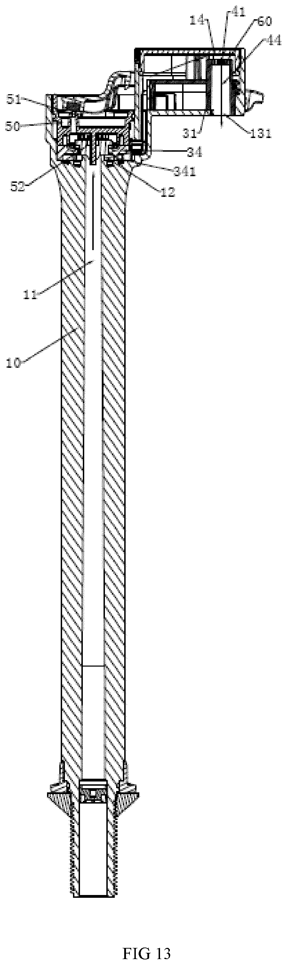

As shown in FIG. 13, this embodiment differs from Embodiment 1 mainly in the following aspects: the water inlet mechanism in this embodiment is not provided with the baffle plates 32 on the outer wall of the water outlet pipe 31, and is not provided with the horizontal baffle channel 42 either; and a flow guide part 34 is disposed between the water-stop gasket 52 and the valve body 10 in this embodiment, a water gap is formed between the flow guide part 34 and the valve body 10, and stop ribs 341 are disposed on the flow guide part 34 to buffer the water flow in the water outlet channel 12.

Other parts which not described here are the same as those mentioned above, and will no longer be detailed.

### Embodiment 6: (the buffer channel comprises a top cover flow guide channel 54, a first deceleration channel 43, and a vertical baffle channel 41)

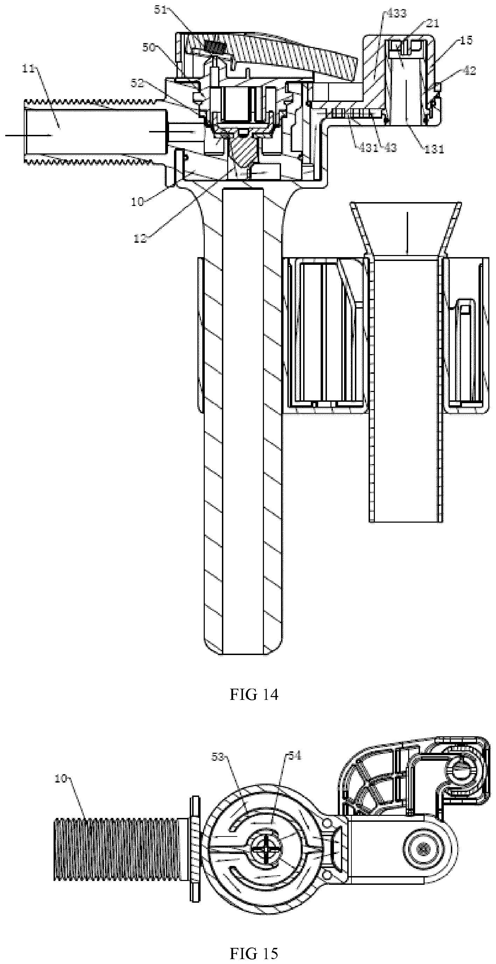

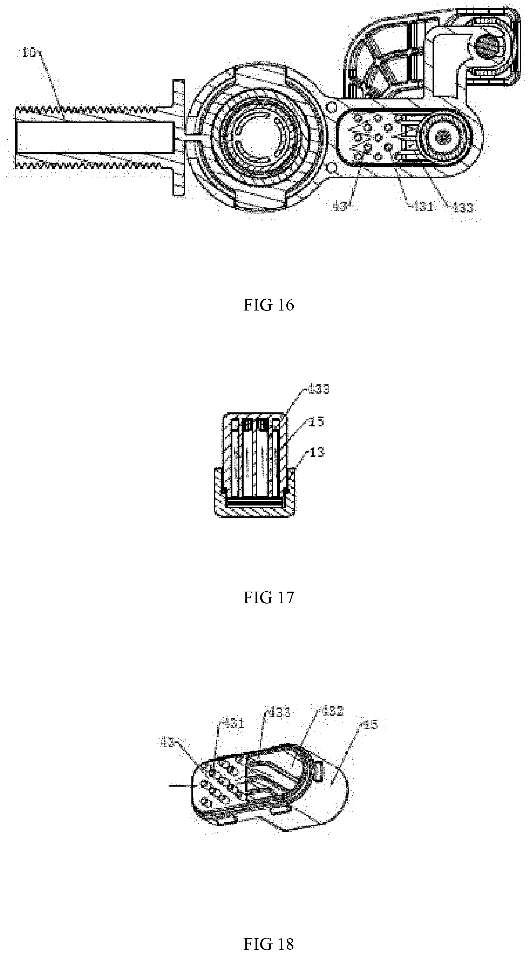

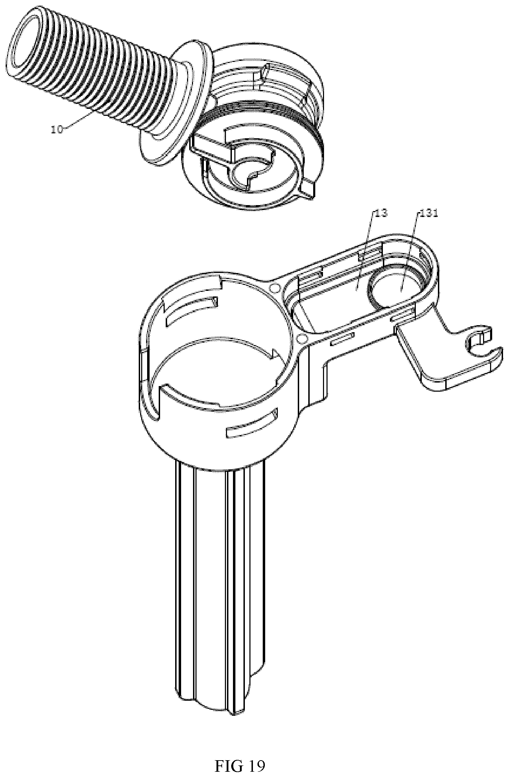

As shown in FIG. 14-FIG.19 this embodiment differs from the above embodiment mainly in the following aspects: the water inlet mechanism in this embodiment is not provided with the horizontal baffle channel 42 and the second deceleration channel 44, and the partition plates 53 in this embodiment are arc-shaped partition plates 53; and in this embodiment, the water outlet channel 12 is provided with a first buffer element for applying resistance to the water flow in the water outlet channel 12, such that the water flow in the water outlet channel 12 forms a first deceleration channel 43 under the action of the first buffer element; and the buffer channel comprises the first deceleration channel 43.

In this embodiment, the first buffer element comprises a plurality of protrusions 442 which are arranged in an array, and the protrusions 442 are used for applying resistance to the water flow in the water outlet channel 12.

In this embodiment, the water inlet mechanism further comprises a gland 15 disposed on and connected to the water outlet cavity 13, wherein one end of the gland 15 protrudes upwards to form a hollow receiving cavity 432, the water outlet pipe 31 is disposed in the receiving cavity 432, a flow gap is formed between the water outlet pipe 31 and the receiving cavity 432, protrusions 442 are disposed on a bottom wall of the other end of the gland 15, flow guide ribs 433 are disposed on an inner wall of the receiving cavity 432, and water in the first deceleration channel 43 flows upwards into the water outlet pipe 31 along the flow guide ribs 433.

In other embodiments, the protrusions 442 may be disposed on an inner wall of the water outlet cavity 13.

The specific working process of this embodiment is as follows:
When water flows into the water inlet valve, water from the water inlet channel 11 flows into the water outlet channel 12, and the water flow in the water outlet channel 12 sequentially flows through the top cover flow guide channel 54, the first deceleration channel 43 and the vertical baffle channel 41, and finally flows out via the water outlet 142 after kinetic energy of the water flow is gradually reduced under the action of the top cover flow guide channel 54, the first deceleration channel 43 and the vertical baffle channel 41.

Other parts which are not described herein are the same as those mentioned above, and will no longer be detailed.

### Embodiment 7:

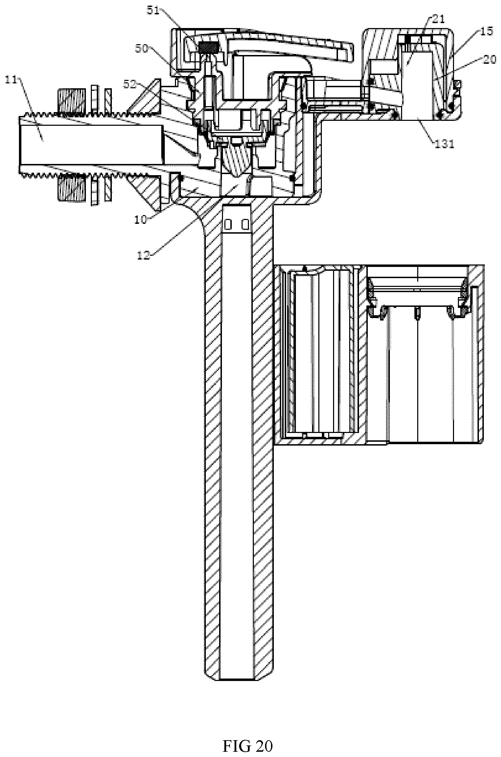

As shown in FIG. 20, this embodiment differs from Embodiment 1 mainly in the following aspect: the water inlet mechanism in this embodiment is not provided with the protrusions 442 on the bottom wall of the other end of the gland 15 and is not provided with the first buffer element either.

Other parts which are not described here are the same as those mentioned above, and will no longer be detailed.

It should be noted that the buffer channel of the invention may comprise any one of or a combination of multiples of the top cover flow guide channel 54, the first deceleration channel 43, the horizontal baffle channel 42, the vertical baffle channel 41, and the second deceleration channel 44 to fulfill the objective of the invention.

### Embodiment 8:

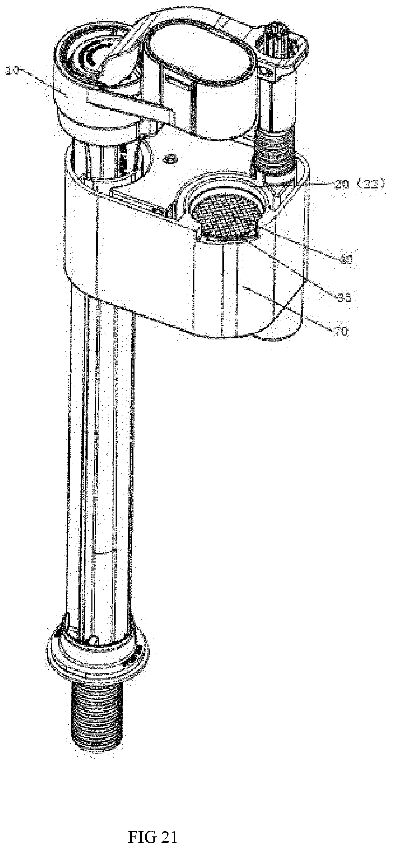

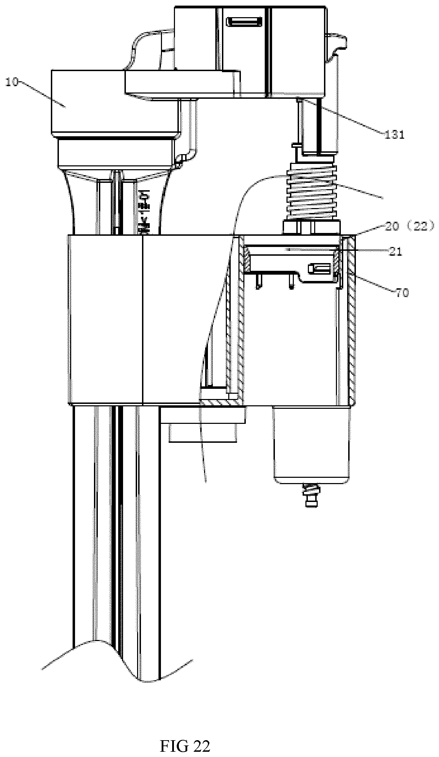

As shown in FIG. 21 and FIG. 22, a water inlet mechanism comprises a valve body 10 and a silencing element 20, wherein the valve body 10 is provided with a water outlet 131, and the silencing element 20 is provided with a silencing channel 21 communicated with the water outlet 131; and when water flows in, a water flow in the valve body 10 flows through the silencing channel 21, such that the impact force of the water flow is reduced. The water inlet mechanism further comprises a flow guide element. In this embodiment, the silencing channel 21 is provided with the flow guide element, so when the silencing channel 21 overflows, the flow guide element guides water flowing over from the silencing channel 21.

In other embodiments, the flow guide element may be disposed in a water tank.

In this embodiment, water flowing over from the silencing channel 21 is guided into an inner cavity of a toilet tank by the flow guide element.

In this embodiment, the flow guide element is a flow guide port 35 formed in the silencing channel 21, and the flow guide port 35 is lower than the water inlet of the silencing channel 21. Specifically, the silencing element 20 comprises a hollow pipe with an inner cavity forming the silencing channel 21, and the flow guide port 35 is a notch formed at the water inlet 22 of the pipe.

In this embodiment, the silencing element 20 comprises a buffer element 40 disposed in the silencing channel 21, water in the silencing channel 21 flows out after kinetic energy of the water flow is reduced under the action of the buffer element 40, and the flow guide element is located upstream of the buffer element 40. Due to the fact that the speed of the water flow in the silencing channel 21 is further decreased by the buffer element 40, the water flow cannot flow away in time when the water pressure is too high, and thus, water may be accumulated upstream of the buffer element 40. In view of this, the flow guide port 35 is arranged to enable water accumulated upstream of the buffer element 40 to flow into the water tank via the flow guide port 35, so that water accumulated around the buffer element 40 is prevented from flowing into a water-stop cup 70 of the water inlet valve, which may otherwise cause water to flow into the water inlet valve in advance.

In this embodiment, the buffer element 40 is a filter screen.

In other embodiments, the buffer element 40 may be a water-stop rib.

In this embodiment, the buffer element 40 is disposed close to the water inlet 22 of the silencing channel 21, and water in the silencing element 20 flows down from the silencing channel 21 after being buffered by the buffer element 40.

In this embodiment, the silencing element 20 is integrally formed on a water-stop cup 70, used for receiving a control buoy, of the water inlet valve.

In other embodiments, the silencing element 20 is formed separately and is fixedly disposed on the water-stop cup 70, used for receiving the control buoy, of the water inlet valve, and water in the silencing channel 21 is guided out of the water-stop cup 70 by the flow guide element.

In this embodiment, the water outlet 131 of the valve body 10 is located over a water inlet 22 of the silencing element 20, and is located above the water level in the water tank.

In this embodiment, an air gap exists between the water outlet 131 of the valve body 10 and the water inlet 22 of the silencing channel 21, and no barrier exists in the air gap. The air gap is a gap communicated with the outside atmosphere.

Preferred embodiments of the invention are illustrated and described above. It should be understood that the invention is not limited to those forms described above, and the above embodiments should not be construed as excluding other embodiments. The invention is applicable to other combinations, amendments, and environments, and can be modified within the scope of the concept of the invention according to the above enlightenments, techniques, or knowledge in relating fields. All modifications and changes made by those skilled in the art without departing from the spirit and scope of the invention should also fall within the protection scope of the appended claims of the invention.

## Claims

1. A water inlet mechanism, comprising a valve body and a silencing element, the valve body being provided with a water outlet, and the silencing element being provided with a silencing channel communicated with the water outlet, and when water flows in, a water flow in the valve body flowing through the silencing channel, such that impact force of the water flow is reduced, wherein a buffer element is disposed in the silencing channel, and water in the silencing channel flows out after kinetic energy of the water flow is reduced under the action of the buffer element; and/or, a flow guide element is disposed in the silencing channel, and the water in the silencing channel flows out under the flow guide action of the flow guide element.

2. The water inlet mechanism according to Claim 1, wherein the flow guide element is a plurality of flow guide ribs disposed in the silencing channel, and the flow guide ribs extend in an axial direction of the silencing element; and the flow guide ribs collaborate with the silencing element to divide the silencing channel into a plurality of cavities; and the flow guide ribs are spaced apart from each other.

3. The water inlet mechanism according to Claim 1, wherein the buffer element is disposed close to a water inlet of the silencing element, and water in the silencing element flows down along an inner wall of the silencing channel after being buffered by the buffer element.

4. The water inlet mechanism according to Claim 1, wherein the buffer element is a filter screen or a water-stop rib.

5. The water inlet mechanism according to Claim 1, wherein the silencing element is a silencing pipe; or, the silencing element comprises a hollow pipe with an inner cavity forming the silencing channel.

6. The water inlet mechanism according to Claim 1, wherein a water inlet of the silencing element is shaped like a bell mouth with an inner diameter becoming larger gradually from inside to outside.

7. The water inlet mechanism according to Claim 1, wherein the water outlet of the valve body is located over a water inlet of the silencing element and is located above a water level in a water tank; and an air gap exists between the water outlet of the valve body and the water inlet of the silencing channel, and no barrier exists in the air gap.

8. The water inlet mechanism according to Claim 1, further comprising a flow guide element, and when the silencing channel overflows, water flowing over from the silencing channel is guided by the flow guide element.

9. The water inlet mechanism according to Claim 8, wherein the water flowing over from the silencing channel is guided into an inner cavity of a toilet tank by the flow guide element.

10. The water inlet mechanism according to Claim 8, wherein the flow guide element is a flow guide port formed in the silencing channel, and the flow guide port is lower than a water inlet of the silencing channel.

11. The water inlet mechanism according to Claim 8, wherein the flow guide element is located upstream of the buffer element.

12. The water inlet mechanism according to Claim 8, wherein the silencing element is integrally formed on a water-stop cup, used for receiving a control buoy, of the water inlet valve; or, the silencing element is formed separately and is fixedly disposed on the water-stop cup, used for receiving the control buoy, of the water inlet valve; and the water in the silencing channel is guided out of the water-stop cup by the flow guide element.

13. A water inlet mechanism, comprising a valve body and a water-stop assembly, the valve body comprising a water inlet channel and a water outlet channel, the water-stop assembly controlling the water inlet channel to be communicated with or not communicated with the water outlet channel, wherein the water outlet channel is provided with at least one section of buffer channel communicated with the water outlet channel, and a water flow in the water outlet channel flows out after kinetic energy of the water flow is reduced under the action of the buffer channel.

14. The water inlet mechanism according to Claim 13, wherein the water outlet channel is provided with a first flow guide element, and the water flow in the water outlet channel forms a vertical baffle channel under the action of the first flow guide element, and the buffer channel comprises the vertical baffle channel.

15. The water inlet mechanism according to Claim 14, wherein the first flow guide element comprises a water outlet pipe, and water in the water outlet channel rises along an outer wall of the water outlet pipe and flows down from an inner cavity of the water outlet pipe, such that the vertical baffle channel is formed.

16. The water inlet mechanism according to Claim 13, wherein the water outlet channel is provided with a second flow guide element, and the water flow in the water outlet channel forms a horizontal baffle channel under the action of the second flow guide element, and the buffer channel comprises the horizontal baffle channel.

17. The water inlet mechanism according to Claim 16, wherein the second flow guide element is a baffle plate or a bent pipe.

18. The water inlet mechanism according to Claim 13, wherein the water outlet channel is provided with a first buffer element for applying resistance to the water flow in the water outlet channel, such that the water flow in the water outlet channel forms a first deceleration channel under the action of the first buffer element; and the buffer channel comprises the first deceleration channel.

19. The water inlet mechanism according to Claim 18, wherein the first buffer element comprises a plurality of protrusions arranged in an array, and the protrusions are used for applying resistance to the water flow in the water outlet channel.

20. The water inlet mechanism according to Claim 13, wherein the water outlet channel is provided with a second buffer element for applying resistance to the water flow in the water outlet channel, and the water flow in the water outlet channel forms a second deceleration channel under the action of the second buffer element; and the buffer channel comprises the second deceleration channel.

21. The water inlet mechanism according to Claim 20, wherein the second buffer element comprises a filter screen for applying resistance to the water flow in the water outlet channel.

22. The water inlet mechanism according to Claim 13, wherein the water-stop assembly comprises a top cover disposed on the water outlet channel, the top cover has a side formed with a pressure release hole and a side provided with a water-stop gasket, a plurality of partition plates spaced apart from each other are disposed on the top cover, the partition plates collaborate with the valve body to form a top cover flow guide channel, and the buffer channel comprises the top cover flow guide channel.

23. The water inlet mechanism according to Claim 13, wherein a third flow guide element is disposed at a water outlet end of the water outlet channel, the water flow in the water outlet channel forms an outlet water flow guide channel under the action of the third flow guide element, and the buffer channel comprises the outlet water flow guide channel.
